# EUROPÄISCHE PATENTSCHRIFT

(11) **EP 3 885 496 B1**
(45) Veröffentlichungstag und Bekanntmachung des Hinweises auf die Patenterteilung: **23.07.2025**
(21) Anmeldenummer: 21163950.5
(22) Anmeldetag: 22.03.2021
(51) Int. Cl.: E03C 1/02

(54) **WANDEINBAU-ANSCHLUSSBOXEINHEIT**
IN-WALL CONNECTION BOX UNIT
UNITÉ DE BOÎTIER DE RACCORDEMENT DESTINÉE À ÊTRE ENCASTRÉE

(30) Priorität: 24.03.2020 DE 102020203792
(43) Veröffentlichungstag der Anmeldung: 29.09.2021
(73) Patentinhaber: Hansgrohe SE, 77761 Schiltach (DE)
(72) Erfinder: Blattner, Joachim, 77716 Haslach (DE); Groß, Jürgen, 77796 Mühlenbach (DE); Lehmann, Günther, 77709 Oberwolfach (DE); Schorer, Jürgen, 77761 Schiltach (DE)
(74) Vertreter: Patentanwälte Ruff, Wilhelm, Beier, Dauster & Partner mbB

(56) Entgegenhaltungen:
- EP-A2- 1 256 662
- EP-A2- 2 101 002
- DE-A1- 102017 100 710
- DE-U1- 20 105 345

## Beschreibung

Die Erfindung bezieht sich auf eine Wandeinbau-Anschlussboxeinheit mit einem Boxgehäusekörper, der einen rückseitigen Basisabschnitt und einen vom Basisabschnitt nach vorn vorstehenden Hülsenabschnitt beinhaltet, und einem am Basisabschnitt des Boxgehäusekörpers angeordneten Anschlusskörper. Der Hülsenabschnitt umgibt umfangsseitig einen Einbaukomponenten-Aufnahmeraum, der über ein offenes vorderes Stirnende des Hülsenabschnitts zugänglich ist. Mit Basisabschnitt ist hierbei vorliegend in einem breit zu verstehenden Sinn derjenige Teil des Boxgehäusekörpers gemeint, an dem der Anschlusskörper gehalten ist. Der Anschlusskörper beinhaltet eine Einbaukomponenten-Anschlusskontur an einer dem Einbaukomponenten-Aufnahmeraum zugewandten Innenseite und eine an einer Außenseite des Boxgehäusekörpers zugängliche Leitungs-Anschlussschnittstellenstruktur.

Derartige Anschlussboxeinheiten werden beispielsweise in der Sanitärinstallationstechnik zum Anschließen von Einbaukomponenten in Form von Sanitärkomponenten wie Wasserauslaufarmaturen für Waschtische, Badewannen, Duschbrausen oder Küchenspülen oder diesen vorgelagerten sanitären Thermostat-, Mischer- und/oder Absperrventileinheiten, an gebäudeseitig vorinstallierte Wasserleitungsanschlüsse und in der Elektroinstallationstechnik zum Anschließen von elektrischen Einbaukomponenten wie Steckdosen, Abzweigdosen, Sensoren, Aktoren, Lichtschalter etc. an gebäudeseitig vorinstallierte Elektroleitungsanschlüsse verwendet. Typisch sind hierbei vor allem Unterputz-Ausführungen, bei denen die Wandeinbau-Anschlussboxeinheit derart in die betreffende Gebäudewand eingebaut wird, dass sie vorderseitig möglichst bündig mit der fertiggestellten Gebäudewandfläche, z.B. einer verputzten Wandfläche oder einer Fliesenwandfläche, abschließt. Es versteht sich, dass die Gebäudewand hierbei sowohl eine vertikale Gebäudewand im engeren Sinn als auch eine Bodenwand bzw. Bodenfläche oder eine Deckenwand bzw. Deckenfläche eines Gebäudes bzw. Zimmers sein kann, im Sanitärfall z.B. eines Duschraums, eines Badezimmers, eines Toilettenraums, einer Küche etc.

Die Leitungs-Anschlussschnittstellenstruktur beinhaltet typischerweise eine oder mehrere Anschlusschnittstellen, im Sanitärfall eine Fluidleitungs-Anschlussschnittstellenstruktur insbesondere in Form entsprechender Rohrleitungs-Anschlussstutzen zum Ankoppeln an je einen korrespondierenden gebäudeseitigen Rohrleitungs-Anschlussstutzen z.B. für Kaltwasser, Warmwasser oder aus Kaltwasser und Warmwasser gemischtes Mischwasser, im Elektrofall eine Elektroleitungs-Anschlussschnittstellenstruktur insbesondere in Form von Kabelleitungsanschlüssen.

Die Einbaukomponenten-Anschlusskontur des Anschlusskörpers, im Sanitärfall eine Sanitärkomponenten-Anschlusskontur und im Elektrofall eine Elektrokomponenten-Anschlusskontur, ist dafür eingerichtet, mit einer korrespondierenden Anschlusskontur einer anzukoppelnden Einbaukomponente, wie einer Misch- und/oder Absperrventileinheit oder einer Wasserauslaufarmatur im Sanitärfall bzw. einer elektrischen Einbaukomponente im Elektrofall, zusammenzuwirken. Im Sanitärfall beinhaltet der Anschlusskörper eine Fluidkanalstruktur zur Fluidverbindung der boxaußenseitigen Fluidleitungs-Anschlussschnittstellenstruktur mit der boxinnenseitigen Sanitärkomponenten-Anschlusskontur, im Elektrofall eine elektrisch leitende Verbindung der boxaußenseitigen Elektroleitungs-Anschlussschnittstellenstruktur mit der boxinnenseitigen Elektrokomponenten-Anschlusskontur.

Die Anschlussboxeinheit wird mit ihrer Rückseite bzw. einem rückseitigen Boden voraus in eine Gebäudewandöffnung eingesetzt oder an einer Gebäudewand, z.B. einer im Trockenbau erstellten Wand, platziert, wobei die benötigten Leitungsverbindungen zwischen den gebäudeseitigen Anschlüssen einerseits und der Anschlussschnittstellenstruktur des Anschlusskörpers andererseits hergestellt werden. Nach Fertigstellung der Wand kann dann über das offene vordere Stirnende des Boxgehäusekörpers die Einbaukomponente in den Aufnahmeraum des Boxgehäusekörpers eingebracht und an die passende Anschlusskontur des Anschlusskörpers angekoppelt werden.

Eine vor allem auch an derartige sanitäre Wandeinbau-Anschlussboxeinheiten gestellte Anforderung besteht darin, störende Geräusche, die von einer angeschlossenen Sanitärarmatur erzeugt oder über das gebäudeseitige Wasserleitungsnetz als Wasser-oder Körperschall übertragen werden können, nicht auf den Boxgehäusekörper übertragen oder jedenfalls von diesem resonanzkörperartig verstärkt werden. Hierbei besteht bei herkömmlichen Anschlussboxeinheiten der Anschlusskörper meist aus Metall, der Boxgehäusekörper meist aus einem steifen Kunststoffmaterial. Eine weitere Anforderung besteht meist darin, für eine ausreichende Wasserdichtheit der Anschlussboxeinheit zu sorgen, damit keine Wasserleckagen in die Gebäudewand auftreten.

Die Patentschrift EP 1 006 244 B1 offenbart eine sanitäre Wandeinbau-Anschlussboxeinheit der eingangs genannten Art, bei der zwischen den Boxgehäusekörper und den Anschlusskörper ein Verbindungselement aus schalldämmendem Material derart eingebracht ist, dass kein direkter Berührkontakt zwischen Boxgehäusekörper und Anschlusskörper besteht. Etwaige Armatur-/Leitungsgeräusche, die zum Anschlusskörper gelangen, werden dann von diesem nicht zum Boxgehäusekörper weitergeleitet, sondern vom schalldämmenden Verbindungselement absorbiert. Das Verbindungselement besteht dazu vorzugsweise aus einem gummielastischen Material. Zur Fertigstellung dieser Anschlussboxeinheit wird das Verbindungselement nach Einsetzen des Anschlusskörpers in den Boxgehäusekörper vorzugsweise von der Gehäuseaußenseite her zwischengefügt, wozu der Anschlusskörper mit einfachen Hilfsmitteln etwas nach vorn oder zur Seite bewegt wird, oder vor dem Einfügen des Anschlusskörpers in den Boxgehäusekörper in eine hierzu vorgesehene Ausnehmung des Anschlusskörpers und/oder des Boxgehäusekörpers eingesetzt.

Die Offenlegungsschrift DE 10 2004 060 744 A1 offenbart eine sanitäre Wandeinbau-Anschlussboxeinheit der eingangs genannten Art, bei welcher der Boxgehäusekörper aus einem gummielastischen Material gebildet ist und der Anschlusskörper unter Ausnutzung der gummielastischen Nachgiebigkeit des Boxgehäusekörpers in diesen eingefügt werden kann. Insbesondere können am Anschlusskörper radial abstehende Anschlussstutzen durch gummielastisch aufweitbare Seitenwandöffnungen des Boxgehäusekörpers hindurchgesteckt und außenseitig durch das sich gummielastisch anlegende Material des Öffnungsrandes abgedichtet werden. Damit soll eine gewünschte Dichtigkeit und Schalldämmung für die Anschlussboxeinheit erzielt werden.

Die Offenlegungsschrift DE 10 2017 100 710 A1 offenbart eine sanitäre Wandeinbau-Anschlussboxeinheit der eingangs genannten Art, bei welcher der Boxgehäusekörper zweiteilig aus einer bodenbildenden Unterschale und einer mit der Unterschale verbindbaren Oberschale gebildet ist. Zur Montage wird der Anschlusskörper an die Unterschale angelegt, und dann wird die Oberschale aufgesetzt und mit dieser verbunden. Zwischen den Anschlusskörper einerseits und die Unterschale bzw. die Oberschale andererseits kann jeweils ein O-Ring oder bevorzugt eine Dicht- oder Klebemasse als Dichtmittel eingebracht sein.

Des Weiteren sind andersartige sanitäre Wandeinbau-Anschlussboxeinheiten bekannt, die einen allseitig umschließenden Kunststoffschaumkörper beinhalten, ohne dass im Inneren eines Boxgehäusekörpers ein Einbaukomponenten-Aufnahmeraum zugänglich bleibt, in den eine entsprechende Einbaukomponente zur Ankopplung an eine korrespondierende Anschlusskontur eines mit dem Boxgehäusekörper verbundenen Anschlusskörpers eingefügt werden kann. Derartige eingegossene Anschlussboxeinheiten, aus denen nur Leitungsanschlussstutzen herausführen oder bei denen der Kunststoffschaumkörper nachträglich zum Ankoppeln einer Einbaukomponente aufgeschnitten werden muss, sind z.B. in den Offenlegungsschriften DE 26 37 719 A1, EP 0 424 690 A1 und DE 197 15 651 A1 sowie der Gebrauchsmusterschrift DE 20 2009 014 967 U1 offenbart.

Die Gebrauchsmusterschrift DE 201 05 345 U1 offenbart eine Montageeinheit für die Sanitär- und Heizungsinstallation mit einem aus einem aushärtbaren Isolationsschaummaterial gebildeten Gehäuse, das einen Grundkörper und einen Deckkörper umfasst und an dem formschlüssig Anschlussstücke für ein sanitär- oder heizungsinstallationstypisches, hülsenförmiges Einbauteil z.B. in Form einer Aufnahme für eine Wasserzählereinheit oder eine Absperrventileinheit gehalten sind, wobei das hülsenförmige Einbauteil mittels Löten mit den Anschlussstücken verbunden und in eine kreisrunde Aussparung im Grundkörper eingelegt ist, so dass es freitragend von den Anschlussstücken gehalten ist. Mit der Aussparung im Grundkörper korrespondiert eine kreisförmige Durchführöffnung im Deckkörper, in die das hülsenförmige Einbauteil hineinragt, wodurch eine Ablese- oder Zugriffsmöglichkeit für die in die Aufnahme eingesetzte Messgerät- bzw. Absperrventileinheit bereitgestellt wird.

Die Offenlegungsschrift EP 1 256 662 A2 offenbart die Merkmale des Oberbegriffs von Anspruch 1, nämlich eine Unterputzwasserarmatur mit einer mehrteiligen Dämmstoffhülle aus Schaumstoff, die eine einstückige, tropfdichte Unterschale, wenigstens eine Oberschale und einen die Ober- und die Unterschale zumindest teilweise übergreifenden, topfartigen Deckel umfasst.

Die Offenlegungsschrift EP 2 101 002 A2 offenbart einen Einbaukasten für Sanitärarmaturen, der eine Bodenplatte mit aufstehendem Rand und eine gegenüberliegend angeordnete Deckeleinheit umfasst, von der ein hülsenförmiger Ansatz mit einer stirnseitigen Öffnung absteht, in die ein Träger einsetzbar ist, der eine Mischerkartusche trägt. In einem Überlappungsbereich von Ansatz und Träger können Dichtungen zum Abdichten des Trägers gegen den Einbaukasten angeordnet sein.

Der Erfindung liegt als technisches Problem die Bereitstellung einer Wandeinbau-Anschlussboxeinheit der eingangs genannten Art zugrunde, die gegenüber dem oben erwähnten Stand der Technik insbesondere funktionelle Vorteile und/oder Vorteile hinsichtlich Fertigungs- und/oder Montageaufwand bietet.

Die Erfindung löst dieses Problem durch die Bereitstellung einer Wandeinbau-Anschlussboxeinheit mit den Merkmalen des Anspruchs 1. Bei dieser Anschlussboxeinheit sind der Hülsenabschnitt und der Basisabschnitt des Boxgehäusekörpers einteilig aus einem Kunststoffschaummaterial gebildet, und der Anschlusskörper ist in das Kunststoffschaummaterial des Basisabschnitts eingebettet. Dabei liegen die Leitungs-Anschlussschnittstellenstruktur und die Einbaukomponenten-Anschlusskontur frei, d.h. sie sind nicht vom Kunststoffschaummaterial bedeckt. Der Anschlusskörper besteht vorzugsweise aus einem steiferen bzw. festeren Metall- oder Kunststoffmaterial als das Kunststoffschaummaterial des Boxgehäusekörpers.

Die einteilige Fertigung des Hülsenabschnitts und des Basisabschnitts des Boxgehäusekörpers aus einem Kunststoffschaummaterial und das Einbetten des Anschlusskörpers in das Kunststoffschaummaterial des Basisabschnitts vereinfacht die Fertigung bzw. Montage, da das Zusammenfügen mehrerer Teile des Boxgehäusekörpers entfällt und das Anbringen des Anschlusskörpers zusammen mit der Herstellung des Boxgehäusekörpers in einem gemeinsamen Fertigungsprozess erfolgen kann, bei dem der Boxgehäusekörper aus dem Kunststoffschaummaterial gebildet und gleichzeitig der Anschlusskörper darin eingebettet wird, z.B. durch Umgießen bzw. Umschäumen.

Das Kunststoffschaummaterial verleiht dem Boxgehäusekörper erwünschte Schalldämmeigenschaften, so dass sich anderweitige Schalldämmungsmaßnahmen erübrigen. Des Weiteren lässt sich durch die Einbettung des Anschlusskörpers in das angrenzende Kunststoffschaummaterial eine gewünschte Dichtigkeit der Anschlussboxeinheit bereitstellen, insbesondere an der Grenzfläche zwischen Anschlusskörper und Boxgehäusekörper, ohne dass dazu weitere Abdichtmaßnahmen ergriffen werden müssen. Das Kunststoffschaummaterial des Boxgehäusekörpers kann außerdem eine gewünschte thermische Isolierung bereitstellen.

Erfindungsgemäß ist der Anschlusskörper ringförmig gebildet und außenumfangsseitig von angrenzendem Kunststoffschaummaterial des Basisabschnitts umgeben und grenzt vorderseitig an einem Randbereich an das Kunststoffschaummaterial des Basisabschnitts an. Mit dieser Ausführung ist der Anschlusskörper folglich in Richtung Vorderseite in das Kunststoffschaummaterial des Boxgehäusekörpers eingebettet. Dies kann dazu beitragen, den Anschlusskörper zuverlässig im Basisabschnitt des Boxgehäusekörpers zu halten und/oder ihn möglichst weitgehend in angrenzendes Kunststoffschaummaterial des Basisabschnitts des Boxgehäusekörpers einzubetten.

Gemäß einem weiteren Aspekt der Erfindung weist der Anschlusskörper eine geschlossene Ringform auf, wobei die Einbaukomponenten-Anschlusskontur an einer Innenumfangsseite des Anschlusskörpers und die mindestens eine Leitungs-Anschlussschnittstellenstruktur an einer Außenumfangsseite des Anschlusskörpers ausgebildet sind. Dies stellt eine für viele Anwendungen günstige Ausführung des Anschlusskörpers dar, die eine umfangsseitige Ankopplung an gebäudeseitige Anschlüsse ermöglicht. Damit kann bei Bedarf die Bodenfläche des Boxgehäusekörpers von derartigen Leitungsanschlussstrukturen freigehalten werden. Alternativ kann die Leitungs-Anschlussschnittstellenstruktur auch eine oder mehrere axial vom Anschlusskörper abgehende Anschlüsse bzw. ausschließlich axial vom Anschlusskörper abgehende Anschlüsse beinhalten.

In einer Weiterbildung der Erfindung weist der Basisabschnitt einen geschlossenen rückwärtigen Boden auf, und der Anschlusskörper grenzt rückseitig an das Kunststoffschaummaterial des Bodens an. Diese geschlossene Bodenausführung stellt allein durch das Kunststoffschaummaterial des Boxgehäusekörpers einen dichten, rückwärtigen Bodenbereich für die Anschlussboxeinheit zur Verfügung. Dabei deckt das Kunststoffschaummaterial des Bodens den Anschlusskörper rückseitig ab, so dass der Anschlusskörper rückseitig nicht nach außen freiliegt. Alternativ ist die Anschlussboxeinheit rückseitig nicht geschlossen, und/oder der Anschlusskörper bildet einen Teil eines rückwärtigen Bodens, zu dem dann zu einem übrigen Teil der Boxgehäusekörper beiträgt.

In einer Weiterbildung der Erfindung weist der Anschlusskörper mindestens eine sich von seiner Außenseite zu seiner Innenseite erstreckende Durchführungsöffnung auf, die außenseitig von einem Verschlussmembranabschnitt des Kunststoffschaummaterials des Basisabschnitts abgedeckt ist. Diese Realisierung ermöglicht bei Bedarf eine optionale Durchführung eines weiteren, im Bedarfsfall vorgesehenen, langgestreckten Elements, z.B. eines elektrischen Leitungskabels, eines Fluidleitungsrohres oder dergleichen, durch den Anschlusskörper und den Boxgehäusekörper hindurch, wozu dann die Durchführungsöffnung freigelegt wird, indem der Verschlussmembranabschnitt des Kunststoffschaummaterials durchbrochen wird. In alternativen Ausführungen, in denen dies nicht benötigt wird, fehlt eine solche von einem Verschlussmembranabschnitt des Kunststoffschaummaterials des Boxgehäusekörpers abgedeckte Durchführungsöffnung im Anschlusskörper.

In einer Ausgestaltung der Erfindung weist das Kunststoffschaummaterial des Basisabschnitts eine außen an den Verschlussmembranabschnitt angrenzende Rohreinsteckstutzenöffnung auf. Damit lässt sich vorteilhaft bei Bedarf ein Rohr in diese Rohreinsteckstutzenöffnung einstecken und auf diese Weise am Basisabschnitt des Boxgehäusekörpers halten. Dabei kann es sich beispielsweise um ein Hohlrohr oder Leerrohr zur Durchführung eines elektrischen Leitungskabels handeln. In alternativen Ausführungen ist keine derartige Rohreinsteckstutzenöffnung am Basisabschnitt des Boxgehäusekörpers ausgebildet.

In einer Weiterbildung der Erfindung weist der Hülsenabschnitt innenumfangsseitig einen radial nach innen vorstehenden Wulstvorsprung auf. Dies kann bei Bedarf vorteilhaft beispielsweise dazu genutzt werden, eine hülsenförmige Verlängerungshülse axial stufenlos höhenverstellbar im Hülsenabschnitt abgedichtet zu führen und zu halten, beispielsweise um mittels einer solchen Verlängerungshülse die axiale Ausdehnung des Boxgehäusekörpers in Richtung nach vorn variabel zu verlängern. Alternativ ist der Hülsenabschnitt des Boxgehäusekörpers ohne einen derartigen Wulstvorsprung gebildet.

In einer Weiterbildung der Erfindung ist in das Kunststoffschaummaterial des Basisabschnitts mindestens ein Verbindungsstrukturelement eingebettet. Das Verbindungsstrukturelement weist eine Verbindungsstruktur auf, die mit einem Verbindungskörper zusammenwirken kann, mit dem ein Funktionsflächenkörper am Basisabschnitt gehalten werden kann, der eine z.B. den Hülsenabschnitt umgebende Funktionsfläche radial außerhalb des Hülsenabschnitts bereitstellt, die z.B. als eine Befestigungsfläche oder eine Dichtfläche fungieren kann, um ein Befestigungsmittel und/oder ein Abdichtmittel für den Boxgehäusekörper bezüglich einer Gebäudewandfläche bereitzustellen. In alternativen Ausführungen besitzt die Anschlussboxeinheit kein solches eingebettetes Verbindungsstrukturelement.

In einer Weiterbildung der Erfindung ist das Kunststoffschaummaterial ein thermoplastisches Partikelschaummaterial. Dies stellt eine für zahlreiche Anwendungen vorteilhafte Wahl für das Kunststoffschaummaterial des Boxgehäusekörpers dar. Das thermoplastische Partikelschaummaterial, z.B. aus Polypropylen, ist hinsichtlich Fertigungsaufwand und hinsichtlich seiner funktionellen Eigenschaften in Bezug auf die gewünschten Funktionen der Schall-/Geräuschdämmung, der thermischen Isolation und der Abdichtung günstig. Es besitzt eine gewünschte vorgebbare Festigkeit bzw. Steifigkeit einerseits und eine gewünschte vorgebbare schall- und stoßabsorbierende Nachgiebigkeit andererseits.

Vorteilhafte Ausführungsformen der Erfindung sind in den Zeichnungen dargestellt. Diese und weitere Ausführungsformen der Erfindung werden nachfolgend näher beschrieben. Hierbei zeigen:
- Fig. 1: eine perspektivische Explosionsansicht einer exemplarischen Ausführung einer als sanitäre Wandeinbau-Anschlussboxeinheit konfigurierten Wandeinbau-Anschlussboxeinheit,
- Fig. 2: eine Vorderseitenansicht der Anschlussboxeinheit von Fig. 1,
- Fig. 3: eine Schnittansicht längs einer Linie III-III in Fig. 2 und
- Fig. 4: eine Schnittansicht längs eine Linie IV-IV in Fig. 3.

Die in den Figuren anhand einer exemplarischen Ausführung dargestellte sanitäre Wandeinbau-Anschlussboxeinheit weist einen Boxgehäusekörper 1 mit einem rückseitigen Basisabschnitt 2 und einem vom Basisabschnitt 2 nach vorn abstehenden Hülsenabschnitt 3 sowie einen am Basisabschnitt 2 des Boxgehäusekörpers 1 angeordneten Anschlusskörper 6 auf. Der Hülsenabschnitt 3 umgibt umfangsseitig einen Einbaukomponenten-Aufnahmeraum 4, in diesem Fall ein Sanitärkomponenten-Aufnahmeraum, der über ein offenes vorderes Stirnende 5 des Hülsenabschnitts 3 zugänglich ist. Der Anschlusskörper 6 weist eine dem Einbaukomponenten-Aufnahmeraum 4 zugewandte Einbaukomponenten-Anschlusskontur 7, in diesem Fall eine Sanitärkomponenten-Anschlusskontur, eine an einer Außenseite 8 des Boxgehäusekörpers 1 zugängliche Leitungs-Anschlussschnittstellenstruktur 9, hier eine Fluidleitungs-Anschlussschnittstellenstruktur, und eine Fluidkanalstruktur 10 auf. Die Fluidkanalstruktur 10 sorgt für die benötigte Fluidverbindung der Fluidleitungs-Anschlussschnittstellenstruktur 9 mit der Sanitärkomponenten-Anschlusskontur 7.

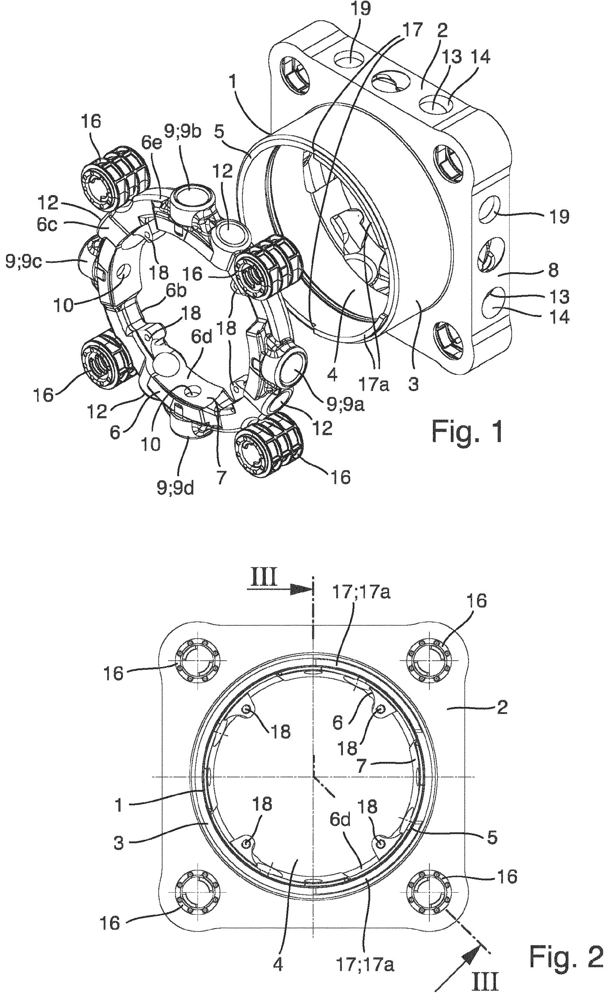

Der Basisabschnitt 2 und der Hülsenabschnitt 3 des Boxgehäusekörpers 1 sind einteilig aus einem Kunststoffschaummaterial gebildet. Der Anschlusskörper 6 besteht aus einem demgegenüber steiferen, festeren Metall- oder Kunststoffmaterial und ist in das Kunststoffschaummaterial des Basisabschnitts 2 eingebettet, wobei die Fluidleitungs-Anschlussschnittstellenstruktur 9 und die Sanitärkomponenten-Anschlusskontur 7 freiliegen, d.h. nicht durch das Kunststoffschaummaterial des Boxgehäusekörpers 1 bedeckt sind. Das Kunststoffschaummaterial behindert daher weder das Ankoppeln der Anschlussboxeinheit an eine gebäudeseitige Rohrleitungsanschlussstruktur über die Fluidleitungs-Anschlussschnittstellenstruktur 9 noch das Ankoppeln einer in den Sanitärkomponenten-Aufnahmeraum 4 des Boxgehäusekörpers 1 eingebrachten Sanitärkomponente an den Anschlusskörper 6 über dessen Anschlusskontur 7. In der Explosionsansicht von Fig. 1 ist der Anschlusskörper 6 aus seiner Einbettung im Boxgehäusekörper 1 herausgenommen gezeigt, so dass seine Kontur deutlicher erkennbar ist.

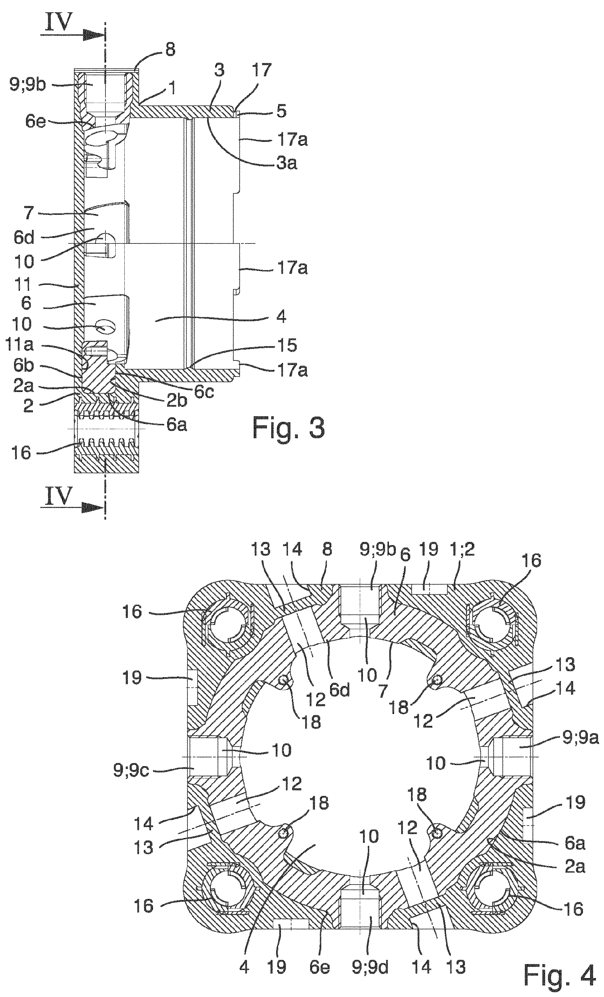

In entsprechenden Ausführungen ist der Anschlusskörper 6, wie im gezeigten Beispiel, ringförmig gebildet und außenumfangsseitig von angrenzendem Kunststoffschaummaterial des Basisabschnitts 2 des Boxgehäusekörpers 1 umgeben. Mit anderen Worten schließt an eine Außenumfangsseite 6a des Anschlusskörpers 6 radial nach außen mit Berührkontakt eine Innenseite 2a des Basisabschnitts 2 des Boxgehäusekörpers 1 an, wie insbesondere aus den Fig. 3 und 4 ersichtlich. Dies gewährleistet eine zuverlässige Abdichtung zwischen dem Anschlusskörper 6 und dem Boxgehäusekörper 1 in diesem Bereich. Im gezeigten Beispiel besitzt der Anschlusskörper 6 eine geschlossene Ringform, in alternativen Ausführungsformen eine offene Ringform oder eine von einem Ring abweichende Form, insbesondere auch eine Form, wie sie von herkömmlichen, in Wandeinbau-Anschlussboxeinheiten verwendeten Anschlusskörpern an sich bekannt ist.

In vorteilhaften Ausführungen weist der Basisabschnitt 2 des Boxgehäusekörpers 1, wie beim gezeigten Ausführungsbeispiel, einen geschlossenen rückwärtigen Boden 11 auf, und der Anschlusskörper 6 grenzt rückseitig an das Kunststoffschaummaterial des Bodens 11 an. Mit anderen Worten schließt eine Rückseite 6b des Anschlusskörpers 6 mit Berührkontakt an eine Vorderseite 11a des rückwärtigen Bodens 11 an, wie insbesondere aus Fig. 3 ersichtlich. Die geschlossene Ausbildung des rückwärtigen Bodens 11 stellt einen fluiddichten Rückseitenabschluss des Boxgehäusekörpers 1 dar, und das direkte Anliegen der Rückseite 6b des Anschlusskörpers 6 und der Vorderseite 11a des Bodens 11 gegeneinander gewährleistet die Fluiddichtheit zwischen dem Anschlusskörper 6 und dem Boxgehäusekörper 1 in diesem Bereich.

In entsprechenden Ausführungen grenzt der Anschlusskörper 6, wie beim gezeigten Ausführungsbeispiel, vorderseitig an einem Randbereich 6c an das Kunststoffschaummaterial des Basisabschnitts 2 des Boxgehäusekörpers 1 an. Mit anderen Worten liegt das Kunststoffschaummaterial des Boxgehäusekörpers 1 in einem korrespondierenden Randbereich 2b des Basisabschnitts 2 mit Berührkontakt gegen diesen vorderseitigen Randbereich 6c des Anschlusskörpers 6 an. Dies gewährleistet eine zuverlässige Abdichtung zwischen dem Anschlusskörper 6 und dem Boxgehäusekörper 1 in diesem Bereich.

In vorteilhaften Ausführungen sind, wenn der Anschlusskörper 6 eine geschlossene Ringform aufweist, die Sanitärkomponenten-Anschlusskontur 7 an einer Innenumfangsseite 6d des Anschlusskörpers 6 und die Fluidleitungs-Anschlussschnittstellenstruktur 9 an einer Außenumfangsseite 6e des Anschlusskörpers 6 ausgebildet, wie im gezeigten Ausführungsbeispiel.

Die Fluidleitungs-Anschlussschnittstellenstruktur 9 weist je nach Bedarf eine, zwei oder mehr Anschlussschnittstellen auf. Im gezeigten Beispiel beinhaltet die Fluidleitungs-Anschlussschnittstellenstruktur 9 mehrere Anschlussschnittstellen, exemplarisch in Form von vier im Umfangswinkelabstand von jeweils 90° versetzt angeordneten Anschlussstutzen 9a, 9b, 9c, 9d, wobei alle Anschlussschnittstellen an der Außenumfangsseite 6e des Anschlusskörpers 6 ausgebildet sind. In alternativen Ausführungen sind eine, mehrere oder alle Anschlussschnittstellen der Fluidleitungs-Anschlussschnittstellenstruktur 9 nach hinten gewandt an der Rückseite 6b des Anschlusskörpers 6 ausgebildet.

In entsprechenden Ausführungen weist der Anschlusskörper 6, wie im gezeigten Beispiel, mindestens eine sich von seiner Außenseite zu seiner Innenseite erstreckende Durchführungsöffnung 12 auf, die außenseitig von einem Verschlussmembranabschnitt 13 des Kunststoffschaummaterials des Basisabschnitts 2 abgedeckt ist, wie insbesondere aus Fig. 4 ersichtlich. Im gezeigten Beispiel sind vier Durchführungsöffnungen 12 vorhanden, die sich jeweils von der Außenumfangsseite 6e des Anschlusskörpers 6 zu dessen Innenumfangsseite 6d erstrecken. Die Durchführungsöffnung kann beispielsweise zum Durchführen eines elektrischen Leitungskabels oder eines anderen langgestreckten Elements verwendet werden, wozu dann der Verschlussmembranabschnitt 13 geeignet geöffnet wird. Wenn die Durchführungsöffnung 12 im Anschlusskörper 6 hierfür nicht benötigt wird, bleibt sie unbelegt und durch den Verschlussmembranabschnitt 13 des Kunststoffschaummaterials des Boxgehäusekörpers 1 abgedeckt. In alternativen Ausführungen besitzt der Anschlusskörper 6 keine solche Durchführungsöffnung 12.

In entsprechenden Realisierungen weist das Kunststoffschaummaterial des Basisabschnitts 2 des Boxgehäusekörpers 1, wie beim gezeigten Ausführungsbeispiel, eine außen an den Verschlussmembranabschnitt 13 angrenzende RohreinsteckstutzenÖffnung 14 auf, wie ebenfalls insbesondere aus Fig. 4 zu erkennen. Die Rohreinsteckstutzenöffnung 14 kann insbesondere dazu genutzt werden, ein Hohlrohr oder Leerrohr mit seinem Rohrendbereich darin einzustecken und auf diese Weise zu halten, wobei das Hohl- oder Leerrohr seinerseits dazu dienen kann, ein langgestrecktes Element aufzunehmen, z.B. ein elektrisches Leitungskabel, das dann unter Öffnen des Verschlussmembranabschnitts 13 weiter durch die Durchführungsöffnung 12 hinduch in den Sanitärkomponenten-Aufnahmeraum 4 bzw. den Innenraum des Boxgehäusekörpers 1 geführt werden kann.

In entsprechenden Realisierungen weist der Hülsenabschnitt 3 des Boxgehäusekörpers 1, wie im gezeigten Ausführungsbeispiel, innenumfangsseitig, d.h. an einer Innenseite 3a des Hülsenabschnitts 3, einen radial nach innen vorstehenden Wulstvorsprung 15 auf, wie insbesondere aus Fig. 3 ersichtlich. Der Wulstvorsprung 15 kann beispielsweise dazu genutzt werden, in nicht gezeigter Weise eine Verlängerungshülse axial stufenlos höhenverstellbar im Hülsenabschnitt 3 abdichtend zu führen und zu halten, um mit der Verlängerungshülse die axiale Ausdehnung des Boxgehäusekörpers 1 in Richtung nach vorn, d.h. in Fig. 3 nach rechts, über das freie Stirnende 5 des Hülsenabschnitts 3 hinaus variabel zu verlängern. In alternativer Ausführung besitzt der Hülsenabschnitt 3 keinen solchen Wulstvorsprung 15.

In vorteilhafter Realisierung ist der Boxgehäusekörper 1 einteilig aus einem thermoplastischen Partikelschaummaterial gebildet, das in diesem Fall als das Kunststoffschaummaterial fungiert. Diese Materialwahl erweist sich für den Anwendungszweck der Bereitstellung des Boxgehäusekörpers 1 für die sanitäre Wandeinbau-Anschlussboxeinheit als herstellungstechnisch und funktionell sehr günstig. Alternativ ist der Boxgehäusekörper 1 aus einem anderen Kunststoffschaummaterial gebildet.

In vorteilhaften Ausführungen ist in das Kunststoffschaummaterial des Basisabschnitts 2 des Boxgehäusekörpers 1, wie beim gezeigten Ausführungsbeispiel, mindestens ein Verbindungsstrukturelement 16 eingebettet. Das Verbindungsstrukturelement 16 weist eine Verbindungsstruktur auf, die bei Bedarf mit einem nicht gezeigten Verbindungskörper zusammenwirken kann, mit dem ein nicht gezeigter Funktionsflächenkörper am Basisabschnitt 2 gehalten werden kann, der eine Funktionsfläche radial außerhalb des Hülsenabschnitts 2 bereitstellt. Diese Funktionsfläche kann insbesondere als Befestigungs- und/oder Dichtfläche genutzt werden, um den Boxgehäusekörper 1 an einer gebäudeseitigen Wandfläche zu befestigen und/oder gegenüber einer gebäudeseitigen Wandfläche abzudichten.

Im gezeigten Ausführungsbeispiel sind speziell vier solche Verbindungsstrukturelemente 16 in das Kunststoffschaummaterial des Basisabschnitts 2 eingebettet, z.B. wie gezeigt jeweils um 90° in Umfangswinkelrichtung gegeneinander versetzt in Eckbereichen des viereckförmigen Basisabschnitts 2. In alternativen Ausführungen sind nur eins, zwei, drei oder mehr als vier solche Verbindungsstrukturelemente 16 in das Kunststoffschaummaterial des Basisabschnitts 2 eingebettet, und/oder es sind ein oder mehrere solche Verbindungsstrukturelemente 16 in einer anderen Verteilung bzw. in anderen Bereichen des Basisabschnitts 2 angeordnet, oder die Anschlussboxeinheit ist ohne derartige Verbindungsstrukturelemente gebildet.

Im gezeigten Ausführungsbeispiel besitzt der Basisabschnitt 2 exemplarisch eine viereckförmige bzw. quadratische, quaderförmige Gestalt, in alternativen Ausführungen ist er von anderer Form gebildet, z.B. dreieckförmig oder polygonal mit mehr als vier Eckbereichen oder mit kreisförmigem oder ovalem Querschnitt. Der Hülsenabschnitt 2 ist im gezeigten Beispiel kreiszylindrisch, in alternativen Ausführungen kann er auch von anderer Form sein, z.B. eine polygonale oder ovale Querschnittsform besitzen. Im gezeigten Beispiel weist der Anschlusskörper 6 radial nach innen vorstehende Haltefortsätze 18 mit Befestigungsöffnungen auf, die Teil eines im Übrigen nicht gezeigten Verbindungsmittels zum Festlegen einer in den Aufnahmeraum eingebrachten Einbaukomponente am Anschlusskörper 6 sind. In alternativen Ausführungen sind andere herkömmliche Verbindungsmittel für diesen Zweck vorgesehen.

In entsprechenden Ausführungen besitzt der Boxgehäusekörper 1, wie beim gezeigten Beispiel, am vorderen Stirnende 5 seines Hülsenabschnitts 3 eine Ausrichthilfe 17, die dem Installateur das Ausrichten des Boxgehäusekörpers 1 während der Wandmontage erleichtert. Die Ausrichthilfe 17 beinhaltet zwei sich jeweils über einen vorgegebenen Umfangswinkelbereich mit vorgegebenem Umfangswinkelabstand voneinander beabstandet erstreckende, axial vorspringende Ausrichtstege 17a, gegen deren umfangsseitige Stegenden ein Ausrichtmittel z.B. in Form einer Wasserwaage, Libelle oder Dosenlibelle, in an sich bekannter Weise angelegt werden kann. Dies erleichtert dem Installateur das vertikale und/oder horizontale Ausrichten des Boxgehäusekörpers 1 vor den abschließenden Wandmontageschritten. Alternativ oder, wie im gezeigten Beispiel, zusätzlich beinhaltet der Boxgehäusekörper 1 eine äquivalente Ausrichthilfe in Form einer oder wie gezeigt mehrerer Libellenaufnahmeöffnungen 19, die jeweils als Sackloch im Kunststoffschaummaterial des Basisabschnitts 2 an dessen Außenumfang, ggf. wie gezeigt an unterschiedlichen bzw. allen Umfangsseiten, ausgebildet sind und in die eine übliche Dosenlibelle oder dgl. eingesteckt werden kann.

Wie die gezeigten und die weiteren oben erläuterten Ausführungsbeispiele deutlich machen, stellt die Erfindung eine Wandeinbau-Anschlussboxeinheit zur Verfügung, die funktionelle und fertigungstechnische Vorteile bietet, insbesondere basierend auf der einteiligen Bildung des Basisabschnitts und des Hülsenabschnitts des Boxgehäusekörpers aus einem Kunststoffschaummaterial und auf der Einbettung des Anschlusskörpers in das Kunststoffschaummaterial des Basisabschnitts, und die entsprechend vorteilhaft insbesondere als sanitäre Wandeinbau-Anschlussboxeinheit in der Sanitärinstallationstechnik und als elektrische Wandeinbau-Anschlussboxeinheit in der Elektroinstallationstechnik verwendet werden kann.

## Patentansprüche

1. Wandeinbau-Anschlussboxeinheit, insbesondere sanitäre Wandeinbau-Anschlussboxeinheit, mit
- einem Boxgehäusekörper (1) mit einem rückseitigen Basisabschnitt (2) und einem vom Basisabschnitt nach vorn vorstehenden Hülsenabschnitt (3), der umfangsseitig einen Einbaukomponenten-Aufnahmeraum (4) umgibt, der über ein offenes vorderes Stirnende (5) des Hülsenabschnitts zugänglich ist, und
- einem am Basisabschnitt des Boxgehäusekörpers angeordneten Anschlusskörper (6), der eine dem Einbaukomponenten-Aufnahmeraum zugewandte Einbaukomponenten-Anschlusskontur (7) und eine an einer Außenseite (8) des Boxgehäusekörpers zugängliche Leitungs-Anschlussschnittstellenstruktur (9) aufweist, wobei der Anschlusskörper (6) in das Kunststoffschaummaterial des Basisabschnitts (2) eingebettet ist, wobei die Leitungs-Anschlussschnittstellenstruktur (9) und die Einbaukomponenten-Anschlusskontur (7) freiliegen, **dadurch gekennzeichnet, dass**
- der Hülsenabschnitt (3) und der Basisabschnitt (2) des Boxgehäusekörpers (1) einteilig aus einem Kunststoffschaummaterial gebildet sind,
- der Anschlusskörper (6) ringförmig gebildet und außenumfangsseitig von angrenzendem Kunststoffschaummaterial des Basisabschnitts umgeben ist und vorderseitig an einem Randbereich (6c) an das Kunststoffschaummaterial des Basisabschnitts angrenzt und/oder der Anschlusskörper (6) eine geschlossene Ringform aufweist, bei der die Einbaukomponenten-Anschlusskontur (7) an einer Innenumfangsseite (6d) des Anschlusskörpers (6) und die mindestens eine Leitungs-Anschlussschnittstellenstruktur (9) an einer Außenumfangsseite (6e) des Anschlusskörpers (6) ausgebildet sind.

2. Wandeinbau-Anschlussboxeinheit nach Anspruch 1, weiter **dadurch gekennzeichnet, dass** der Basisabschnitt einen geschlossenen rückwärtigen Boden (11) aufweist und der Anschlusskörper rückseitig an das Kunststoffschaummaterial des Bodens angrenzt.

3. Wandeinbau-Anschlussboxeinheit nach Anspruch 1 oder 2, weiter **dadurch gekennzeichnet, dass** der Anschlusskörper mindestens eine sich von seiner Außenseite zu seiner Innenseite erstreckende Durchführungsöffnung (12) aufweist, die außenseitig von einem Verschlussmembranabschnitt (13) des Kunststoffschaummaterials des Basisabschnitts abgedeckt ist.

4. Wandeinbau-Anschlussboxeinheit nach Anspruch 3, weiter **dadurch gekennzeichnet, dass** das Kunststoffschaummaterial des Basisabschnitts eine außen an den Verschlussmembranabschnitt angrenzende Rohreinsteckstutzenöffnung (14) aufweist.

5. Wandeinbau-Anschlussboxeinheit nach einem der Ansprüche 1 bis 4, weiter **dadurch gekennzeichnet, dass** der Hülsenabschnitt innenumfangsseitig einen radial nach innen vorstehenden Wulstvorsprung (15) aufweist.

6. Wandeinbau-Anschlussboxeinheit nach einem der Ansprüche 1 bis 5, weiter **dadurch gekennzeichnet, dass** in das Kunststoffschaummaterial des Basisabschnitts mindestens ein Verbindungsstrukturelement (16) eingebettet ist.

7. Wandeinbau-Anschlussboxeinheit nach einem der Ansprüche 1 bis 6, weiter **dadurch gekennzeichnet, dass** das Kunststoffschaummaterial ein thermoplastisches Partikelschaummaterial ist.

## Claims

1. Wall installation connection box unit, preferably sanitary wall installation connection box unit, comprising
- a box housing body (1) having a rear-side base portion (2) and a sleeve portion (3) projecting forward from the base portion, which sleeve portion peripherally surrounds an installation component mounting space (4), which space is accessible via an open front end face (5) of the sleeve portion, and
- a connector body (6) disposed on the base portion of the box housing body, which connector body comprises an installation component connection contour (7) facing the installation component mounting space, and a conduit connection interface structure (9) accessible on an outer side (8) of the box housing body, wherein the connector body (6) is embedded in a synthetic foamed material of the base portion (2), wherein the conduit connection interface structure (9) and the installation component connection contour (7) are exposed,
**characterized in that**
- the sleeve portion (3) and the base portion (2) of the box housing body (1) are integrally formed from the synthetic foamed material, and
- the connector body (6) has an annular shape and is surrounded by adjacent synthetic foamed material of the base portion on a peripheral outer side and on a front side on a boundary region (6c) adjoins the synthetic foamed material of the base portion, and/or the connector body (6) has a closed annular shape, wherein the installation component connection contour (7) is provided on an inner peripheral side (6d) of the connector body (6), and the at least one conduit connection interface structure (9) is formed on an outer peripheral side (6e) of the connector body (6).

2. Wall installation connection box unit according to claim 1, further **characterized in that** the base portion has a closed rearward bottom (11), and the connector body on a rear side adjoins the synthetic foamed material of the bottom.

3. Wall installation connection box unit according to claim 1 or 2, further **characterized in that** the connector body has at least one passage opening (12) extending from its outer side to its inner side, which opening is covered on an outer side by a sealing membrane portion (13) of the synthetic foamed material of the base portion.

4. Wall installation connection box unit according to claim 3, further **characterized in that** the synthetic foamed material of the base portion comprises a tube insertion port opening (14) which adjoins the sealing membrane portion at an outer side.

5. Wall installation connection box unit according to any one of claims 1 to 4, further **characterized in that** the sleeve portion has a radially inwards projecting ridge protrusion (15) on an inner peripheral side.

6. Wall installation connection box unit according to any one of claims 1 to 5, further **characterized in that** at least one connection structure element (16) is embedded into the synthetic foamed material of the base portion.

7. Wall installation connection box unit according to any one of claims 1 to 6, further **characterized in that** the synthetic foamed material is a thermoplastic particle foamed material.

## Revendications

1. Unité de boîte de raccordement pour montage encastré, notamment unité de boîte de raccordement pour montage encastré pour sanitaires, avec
- un corps de boîtier de boîte (1) avec une section de base (2) côté arrière et une section de manchon (3) dépassant de la section de base, vers l'avant, laquelle section de manchon entoure du côté circonférentiel un espace de logement de composants encastrés (4), accessible via une extrémité frontale (5) avant, ouverte de la section de manchon, et
- un corps de raccordement (6) disposé sur la section de base du corps de boîtier de boîte, qui présente un contour de raccordement de composants encastrés (7), tourné vers l'espace de logement de composants encastrés et une structure d'interface de raccordement de câble (9) accessible sur un côté extérieur (8) du corps de boîtier de boîte, sachant que le corps de raccordement (6) est intégré dans le matériau en mousse synthétique de la section de base (2), sachant que la structure d'interface de raccordement de câble (9) et le contour de raccordement de composants encastrés (7) sont à découvert,
**caractérisée en ce que**
- la section de manchon (3) et la section de base (2) du corps de boîtier de boîte (1) sont constitués en un seul élément à partir d'un matériau en mousse synthétique,
- le corps de raccordement (6) est conçu sous forme annulaire et est entouré du côté circonférence extérieure du matériau en mousse synthétique avoisinant de la section de base et avoisine côté avant le matériau en mousse synthétique de la section de base sur une zone périphérique (6c) et/ou que le corps de raccordement (6) présente une forme annulaire fermée pour laquelle le contour de raccordement de composants encastrés (7) est constitué sur un côté de la circonférence intérieure (6d) du corps de raccordement (6) et ladite au moins une structure d'interface de raccordement de câble (9) est constituée sur un côté de la circonférence extérieure (6e) du corps de raccordement (6).

2. Unité de boîte de raccordement pour montage encastré selon la revendication 1, **caractérisée en ce que** la section de base présente un fond (11) arrière fermé et que le corps de raccordement avoisine le matériau en mousse synthétique du fond, côté arrière.

3. Unité de boîte de raccordement pour montage encastré selon la revendication 1 ou 2, caractérisée également en ce que le corps de raccordement présente au moins un orifice de passage (12) s'étendant de son côté extérieur à son côté intérieur, qui est recouvert côté extérieur par une section à membrane d'obturation (13), du matériau en mousse synthétique de la section de base.

4. Unité de boîte de raccordement pour montage encastré selon la revendication 3, caractérisée également en ce que le matériau en mousse synthétique de la section de base présente un orifice d'insertion de tube (14) avoisinant la section à membrane d'obturation.

5. Unité de boîte de raccordement pour montage encastré selon l'une des revendications 1 à 4, caractérisée également en ce que la section de manchon présente un bourrelet (15) saillant radialement vers l'intérieur du côté de la circonférence intérieure.

6. Unité de boîte de raccordement pour montage encastré selon l'une des revendications 1 à 5, caractérisée également en ce qu'au moins un élément de structure de liaison (16) est intégré dans le matériau en mousse synthétique de la section de base.

7. Unité de boîte de raccordement pour montage encastré selon l'une des revendications 1 à 6, caractérisée également en ce que le matériau en mousse synthétique est un matériau en mousse particulaire thermoplastique.
